# EUROPÄISCHE PATENTSCHRIFT

(11) **EP 4 185 829 B1**
(45) Veröffentlichungstag und Bekanntmachung des Hinweises auf die Patenterteilung: **08.05.2024**
(21) Anmeldenummer: 21746002.1
(22) Anmeldetag: 16.07.2021
(51) Int. Cl.: F28D 1/04

(54) **VORRICHTUNG ZUR ENERGIEÜBERTRAGUNG UND ZUR ENERGIESPEICHERUNG IN EINEM FLÜSSIGKEITSRESERVOIR**
DEVICE FOR AN ENERGY TRANSFER AND FOR AN ENERGY STORAGE IN A LIQUID RESERVOIR
DISPOSITIF DE TRANSFERT D'ÉNERGIE ET DE STOCKAGE D'ÉNERGIE DANS UN RÉSERVOIR DE LIQUIDE

(30) Priorität: 24.07.2020 DE 102020119652
(43) Veröffentlichungstag der Anmeldung: 31.05.2023
(73) Patentinhaber: Envola GmbH, 89081 Ulm (DE)
(72) Erfinder: SCHECHNER, Alexander, 89075 Ulm (DE); IHLE, Gerhard, 89075 Ulm (DE); ELHELALY, Islam, 89231 Neu-Ulm (DE)
(74) Vertreter: Baur & Weber Patentanwälte PartG mbB
(86) Internationale Anmeldenummer: PCT/EP2021/069956
(87) Internationale Veröffentlichungsnummer: WO 2022/017977

(56) Entgegenhaltungen:
- DE-A1-102015 121 177
- FR-A1- 3 017 934
- US-A1- 2018 112 930

## Beschreibung

Die Erfindung betrifft eine Vorrichtung zur Energieübertragung und zur Energiespeicherung in einem Flüssigkeitsreservoir. Insbesondere betrifft die Erfindung eine Vorrichtung nach dem Oberbegriff des ersten Anspruchs. DE 10 2015 121 177 offenbart eine solche Vorrichtung.

Aus dem allgemeinen Stand der Technik ist es bekannt, im Wechsel der Jahreszeiten entsprechende Vorkehrungen zu treffen, um Temperaturen in Innenräumen in einem für die Nutzer angenehmen Temperaturbereich zu halten. Zur Erhöhung der Temperatur kommen dabei unterschiedliche Ausführungsformen von Heizungen zum Einsatz, während eine Absenkung der Temperatur oftmals durch Klimageräte geschaffen wird, welche Außenluft über einen Kühlkompressor entsprechend heruntergekühlt in den Innenraum führen.

Die Verwendung fossiler Energieträger für die Temperierung von Innenräumen ist nicht nur zunehmend unwirtschaftlich, sondern wird auch auf Grund der damit verbundenen negativen Auswirkungen auf das Klima zunehmend in Frage gestellt. Effiziente Systeme zur Energiespeicherung sorgen beim Heizen und Kühlen von Gebäuden für einen reduzierten Energieverbrauch.

Systeme zur Energiespeicherung werden dabei in sogenannte raumlufttechnische Anlagen eingesetzt, bei denen die Außenluft über einen Wärmetauscher mittels eines Radiallüfters als Zuluft in den Innenraum des Gebäudes geführt werden kann. Abluft wird dabei oftmals mittels eines Verdunstungskühlers dem Wärmetauscher zugeführt, wobei die von einem weiteren Radiallüfter angesaugte Luft als mit der Außenluft in Kontakt kommende Fortluft das Gebäude verlässt. Neben diversen Filtern zur Säuberung der Luft können auch Zusatzheizungen zum Einsatz kommen, so dass eine Innenraumlüftung ermöglicht wird.

Des Weiteren ist es bekannt, Außenluft einem Innenraum zuzuführen, wobei sämtliche Innenräume eines Gebäudes über einen gemeinsamen Abluftkanal verbunden sind, über die die Abluft einer Wärmepumpe zugeführt werden kann, sodass die in der Abluft enthaltene Energie vor dem Verlassen des Gebäudes als Fortluft, beispielsweise einem Warmwasserspeicher, über die Wärmepumpe zugeführt werden kann. Derartige Abluftwärmepumpen tragen zur Energieeffizienz eines Gebäudes bei.

Aus der DE 29 26 610 A1 ist ein Speicher zur Bereitstellung der Eingangswärmeenergie auf niederem Temperaturniveau für Wärmepumpenanlagen bekannt, die diese Energie aufnehmen und auf höherem Temperaturniveau wieder abgeben. Dabei ist ein Wasserbecken so gestaltet, dass sein Wasserinhalt ohne Beckenbeschädigung einfrieren kann und dass ein am Beckenboden befindliches oder in den Beckenboden eingelassenes Wärmetauschsystem erlaubt, die Abkühlungs- und Gefrierwärme dieses Beckens der Kaltseite einer Wärmepumpe zuzuführen.

Die FR 3 017 934 A1 zeigt eine Anordnung mit einem oder mehreren unterirdischen Wasserreservoirs, in denen ein Rohr verläuft, um Luft zu temperieren und damit Räume zu belüften.

Neben der Verwendung eines künstlichen Wasserbeckens ist es auch bekannt, natürliche Gewässer als Speichermedium zu nutzen.

So ist aus der DE 10 2015 104 909 A1 ein Energiespeicher bekannt, der einen Wärmetauscher aufweist, der auf einem vorzugweise über eine erste Zuleitung mit Wasser befüllbarem, als See ausgebildetem Unterbecken schwimmend angeordnet ist, wobei über eine zweite Zuleitung Wasser aus dem Unterbecken und über eine dritte Zuleitung den Wärmetauscher durchdringendes Kühlmittel einer Wärmepumpe in getrennten Kreisläufen zuführbar ist, sodass Energie über den Wärmetauscher unter Vereisung des Wassers des Unterbeckens oder in Form von sensibler Wärme aus dem Wasser des Unterbeckens entnehmbar und an einen Verbraucher zur Wärmeabgabe und/oder zur Kälteabgabe weiterleitbar ist.

Des Weiteren ist aus der DE 10 2015 121 177 A1 eine schwimmende Vorrichtung zum Einbringen von Wärmeenergie in ein Gewässer sowie zum Entziehen von Wärmeenergie aus dem Gewässer bekannt, die einen Wasserwärmetauscher aufweist, der nach dem Einsetzen der Vorrichtung in das Gewässer in dieses eintaucht und einen Zulauf und einen Ablauf für eine Wärmeträgerflüssigkeit aufweist, die Wärmeenergie an das Gewässer abgeben oder dem Gewässer Wärmeenergie entziehen kann. Die Vorrichtung weist darüber hinaus einen Luftwärmetauscher auf, der von Umgebungsluft durchdrungen werden kann und darüber hinaus einen Einlass für aus dem Gewässer stammendes Wasser mit einem entsprechenden Auslass aufweist, sodass Wasser aus dem Gewässer durch den Luftwärmetauscher strömen kann, wobei Wärmeenergie zwischen der dem Luftwärmetauscher durchströmenden Umgebungsluft und dem den Luftwärmetauscher durchströmenden Wasser übertragbar ist.

Eine Vorrichtung zur Energieübertragung und zur Energiespeicherung in einem Flüssigkeitsreservoir kann jedoch auch ohne natürliches Gewässer auskommen.

Ausgehend von diesem Stand der Technik stellt sich die Aufgabe, eine Vorrichtung zur Energieübertragung und zur Energiespeicherung in einem Flüssigkeitsreservoir hinsichtlich ihrer Leistungsfähigkeit zu verbessern.

Die Lösung gemäß Anspruch 1 nutzt Abluft, beispielsweise eines Gebäudes, um die Leistungsfähigkeit der Vorrichtung zu verbessern.

Die Vorrichtung zur Energieübertragung und zur Energiespeicherung in einem Flüssigkeitsreservoir weist einen Wasserwärmetauscher und einen über dem Wasserwärmetauscher angeordneten Luftwärmetauscher auf, wobei der Wasserwärmetauscher in einem Flüssigkeitsreservoir angeordnet ist. Die Vorrichtung weist einem Außenlufteinlass auf, von dem ein Außenluftstrom zu einem Luftauslass durch den Luftwärmetauscher erzeugbar ist. Ein Wärmeübertrager ist ausgebildet, von einem Ablufteinlass einströmende Abluft zur Energieübertragung über das Flüssigkeitsreservoir in einen Randbereich Wärmeübertragers zu lenken, von dem aus die Abluft als Fortluftstrom dem Luftwärmetauscher zuführbar ist, in dem sich der Außenluftstrom und der Fortluftstrom mischen.

Weitere vorteilhafte Ausgestaltungen der Erfindung sind jeweils Gegenstand der Unteransprüche. Diese können in technologisch sinnvoller Weise miteinander kombiniert werden. Die Beschreibung, insbesondere im Zusammenhang mit der Zeichnung, charakterisiert und spezifiziert die Erfindung zusätzlich.

Abluft ist Luft aus dem Gebäude, die nach Kontakt mit der Außenluft als Fortluft bezeichnet wird. Diese Bezeichnung wird deshalb für die aus dem Wärmeübertrager in den Luftwärmetauscher, in den auch Außenluft einströmt, einströmende Luft gewählt. Außenluft kann auch als Umgebungsluft bezeichnet werden.

Die warme Abluft strömt zunächst, vom auch als Strömungslenker wirkenden Wärmeübertrager, über die Flüssigkeitsoberfläche im Flüssigkeitsreservoir geführt und gibt dabei Energie ab, die der Wasserwärmetauscher nutzen kann, bevor die Abluft als Fortluftstrom dem Luftwärmetauscher zugeführt wird. Dadurch kommt es nicht bereits eingangsseitig der Vorrichtung zu einer Vermischung von Umgebungsluft (in der Klimatechnik auch als Außenluft bezeichnet) und Abluft, die mit einem bereits eingangsseitigen Temperaturausgleich einhergehen und die warme Abluft wesentlich schlechter nutzen würde. Um diesen Effekt zu erzielen, ist der Ablufteinlass beabstandet vom Außenlufteinlass und oberhalb des Flüssigkeitsreservoirs angeordnet.

Der Wasserwärmetauscher ist vorteilhafterweise auf einem Boden angeordnet. Das Flüssigkeitsreservoir kann von einer Innenhülle umgeben sein, die die Vorrichtung gegen eine die Innenhülle vom Boden aus überdeckende Außenhülle abgrenzt, wobei die Außenhülle wenigstens teilweise in eine Erdschicht eingebracht ist. In einer Ausführung ist die Vorrichtung nach oben durch einen Deckel so abgeschlossen, dass ein Luftstrom von einem Lufteinlass zu einem Luftauslass durch den Luftwärmetauscher erzeugbar ist. Der Luftauslass kann mittig am Deckel angeordnet sein, wobei vorzugsweise unterhalb des Deckels am Luftauslass ein Ventilator angeordnet ist.

Diese Vorrichtung kann demnach in drei Abschnitte aufgeteilt werden, von denen der Wasserwärmetauscher zuunterst in dem Flüssigkeitsreservoir angeordnet ist. Im oberen Bereich ist der Luftwärmetauscher angeordnet, der von der Umgebungsluft durchströmt werden kann. Über diesem Luftwärmetauscher ist der Deckel angeordnet, der entsprechend gestaltet werden kann, um einen weiterhin nutzbaren Bereich, beispielsweise in einem Garten eines Wohnhauses zu schaffen, wenn die erfindungsgemäße Vorrichtung bis zum Deckel im Erdreich versenkt ist. Typischerweise werden die aktiven Bereiche des Wasserwärmetauschers und des Luftwärmetauschers über eine Hydraulikeinheit mit einer Wärmepumpe verbunden und typischerweise zum Energieaustausch von einem Glykol-Wassergemisch durchströmt. Dabei kann Energieaustausch auf unterschiedliche Weise stattfinden. Zunächst ist es möglich, zu Heizzwecken über die Wärmepumpe Umweltwärme aus dem Luftwärmetauscher zu entnehmen. Dabei kann überschüssige Umweltwärme gleichzeitig in den Wasserwärmetauscher eingeleitet werden. Falls nun nicht genügend Umweltwärme aus dem Luftwärmetauscher zu Heizzwecken zur Verfügung steht, kann diese dem Wasserwärmetauscher entzogen werden. Verfügbare Nutzwärme aus dem Luftwärmetauscher kann abgezweigt werden und dem Wasserwärmetauscher zur Regeneration und Laden des Speichers wiederum zugeführt werden. Neben der Entnahme von Umweltwärme aus dem Luftwärmetauscher kann auch zu Kühlzwecken Wärme über den Luftwärmetauscher abgegeben werden. Dabei kann teilweise Kälte abgezweigt werden und dem Wasserwärmetauscher als aktive Vorkühlung des Speichers zugeführt werden. Eine entsprechende Kältemenge kann auch dem Wasserwärmetauscher entnommen werden, um über die Wärmepumpe Wärme zu Kühlzwecken mittels des Luftwärmetauschers abzugeben. Schließlich ist es auch möglich, zur Abgabe von freier Kühlung über den Luftwärmetauscher zur freien Vorkühlung des Wasserwärmetauschers eine freie Vorkühlung des Speichers zu erreichen. Im Ergebnis wird die Vorrichtung die Effizienz der Erzeugung von Nutzwärme steigern, da der Wasserwärmetauscher Umweltwärme aus warmen Tagen und Energie der Abluft, in die nicht so effizienten kalten Tage verschieben kann und dabei die Effizienz deutlich erhöht. Bei der Kühlung von Gebäuden und/oder Maschinen ist der Effekt der erfindungsgemäßen Vorrichtung noch ausgeprägter, da die Kühle der Nacht in den Speicher gebracht wird, um die Erzeugung der Kälte am Tag durch niedrige Quelltemperaturen zu unterstützen.

Neben dieser Effizienzsteigerung ist die erfindungsgemäße Vorrichtung so ausgeführt, dass sie den Einbau und den Betrieb einer derartigen Anlage deutlich erleichtert. Dazu wird zunächst im Erdreich die Außenhülle eingesetzt, der während des Einbaus durch einen stabilen Kern gestützt sein kann, um entsprechende Einbeulungen zu verhindern. Das Flüssigkeitsreservoir wird im Inneren der Innenhülle gebildet, wobei nach Entnahme des Kerns die Innenhülle zur Stabilisierung der Außenhülle herangezogen werden kann, was dadurch erreicht wird, dass die Außenhülle die Innenhülle vom Boden aus überdeckt. Dies ermöglicht einen einfachen Aufbau der erfindungsgemäßen Vorrichtung, die darüber hinaus auch kostengünstig installiert werden kann.

Der Wärmeübertrager in der Vorrichtung ist ausgebildet, die Abluft eines Gebäudes oder einer Maschine zunächst in einen zentralen Bereich des Wärmeübertragers zu führen und von dort aus radial zum umlaufenden oder nahezu umlaufenden Randbereich in der Peripherie des Wärmeübertragers zu verteilen, sodass ein ausreichend langer Strömungsweg für die Abluft über das Flüssigkeitsreservoir zum Energieaustausch generiert wird.

Die Abluft wird durch zumindest bereichsweise radial verlaufende Lamellen im Wärmeübertrager gelenkt, sodass der Verlauf zumindest eine Radialkomponente hat. Die Lamellen können dazu dienen, die Abluft in den zentralen Bereich zu führen oder sie von dort wegzuführen. Der Wärmeübertrager ist ausgebildet, sodass die Abluft durch Lamellen, die benachbart zum Ablufteinlass angeordnet sind, in den zentralen Bereich geführt wird und durch die anderen Lamellen aus dem zentralen Bereich zum Randbereich verteilt wird.

Um zu verhindern, dass die in den Wärmeübertrager einströmende Abluft statt in den zentralen Bereich direkt zum Randbereich strömt, ist bei den Lamellen, durch die die Abluft zum zentralen Bereich geführt wird, eine Strömungssperre zum Randbereich angeordnet ist, die den direkten Weg zum Randbereich für die einströmende Abluft versperren.

Gemäß einer Ausführungsform der Erfindung ist zwischen dem Wasserwärmetauscher und dem Luftwärmetauscher eine Isolationsschicht angeordnet, und der Wärmeübertrager ist an der dem Flüssigkeitsreservoir zugewandten Seite der Isolationsschicht angeordnet.

Demnach ist es möglich, den Bereich des Wasserwärmetauschers von dem des Luftwärmetauschers zu isolieren, wobei die Kombination aus Wasserwärmetauscher mit dem Wärmeübertrager, Luftwärmetauscher und Isolationsschicht als eine Baueinheit bereitgestellt sein kann, die in die Außenhülle eingebracht wird. Eine derart gestaltete Vorrichtung lässt sich sowohl auf einfache Weise zum Einsatzort transportieren und kann nach Abschluss der Tiefbauarbeiten zügig in den vorgesehenen Freiraum eingebaut werden. Durch Vorsehen eines Außenrahmens an der Isolationsschicht kann die entsprechende Isolationswirkung nach Einsetzen der Einheit zur Außenhülle vervollständigt werden.

In einer Ausführung hat die Isolationsschicht Durchlässe für die zum Randbereich gelenkte Abluft oder ist derart ausgebildet, dass die Abluft an der Außenseite der Isolationsschicht vorbeiströmt, sodass die Abluft als Fortluft zum Luftwärmetauscher geführt werden kann. Alternativ oder zusätzlich ist der Außenrahmen derart ausgestaltet, dass die Abluft zwischen Isolationsschicht und Außenhülle hindurchströmen kann.

In einer Ausführung ist ein Ablufteinlass an einer Aussparung der Isolationsschicht angeordnet, durch den die Abluft in den Wärmeübertrager unter der Isolationsschicht strömt. Alternativ kann der Ablufteinlass auch am Außenrahmen ausgebildet sein.

Nachfolgend werden einige Ausführungsbeispiele anhand der Zeichnung näher erläutert. Es zeigen:
- Figur 1: eine Seitenansicht eines Ausführungsbeispiels einer Vorrichtung,
- Figur 2: das Innere der Vorrichtung in einem Längsschnitt,
- Figur 3: das Innere der Vorrichtung in einer dreidimensionalen Darstellung,
- Figur 4: einen Abschnitt eines Ausführungsbeispiels eines Wärmeübertragers in einer dreidimensionalen Darstellung.

In den Figuren sind gleiche oder funktional gleichwirkende Bauteil mit den gleichen Bezugszeichen versehen.

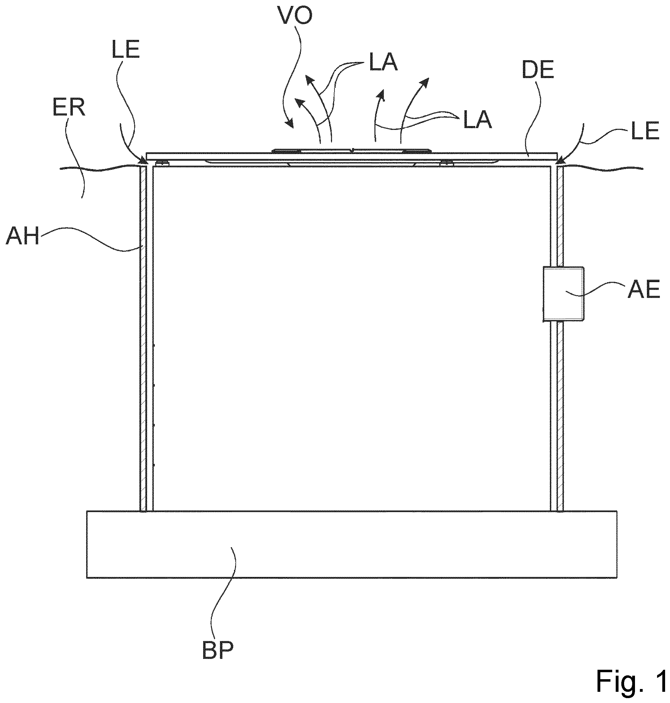

In Figur 1 ist ein Ausführungsbeispiel einer Vorrichtung VO zur Energieübertragung und zur Energiespeicherung in einem Flüssigkeitsreservoir in einer Seitenansicht gezeigt.

Die Vorrichtung VO wird typischerweise im Außenbereich eines Gebäudes installiert, das mittels der Vorrichtung VO beheizt oder gekühlt werden soll. Um eine einfache Installation der Vorrichtung VO zu ermöglichen, wird zunächst die zu installierende Grundfläche bereitgestellt, wobei hier typischerweise als Boden eine Betonplatte BP vorgesehen werden kann. Des Weiteren wird im Außenbereich des Gebäudes Erdreich ER entfernt, sodass eine Außenhülle AH eingebracht werden kann, die auf der Bodenplatte BP ruht. Vor dem Einbringen der Außenhülle AH wird typischerweise ein Leitungsstrang zu einer im Gebäude untergebrachten Wärmepumpe verlegt, der über eine Anschlusseinheit AE mit der Vorrichtung VO verbunden wird. Über die Anschlusseinheit AE wird auch Abluft des Gebäudes der Vorrichtung VO zugeführt.

Für eine materialsparende Ausgestaltung der Außenhülle AH kann es vorgesehen sein, bis zur Installation der Vorrichtung VO einen entsprechenden Platzhalter in das Innere der Außenhülle AH einzusetzen, der als stabilisierender Kern wirkt und ausbeulende Außenhülle AH verhindern soll. Typischerweise ist die Außenhülle AH bezüglich ihrer Höhe so ausgebildet, dass die Vorrichtung VO vollständig oder nahezu vollständig im Erdreich ER zu liegen kommt. Für den Betrieb der Vorrichtung VO ist es jedoch wichtig, dass ein Außenlufteinlass LE Umgebungsluft das Innere der Vorrichtung VO führt und diese über einen Luftauslass LA wieder abgeben kann. Dazu ist die Vorrichtung VO auf ihrer Oberseite mit einem Deckel DE versehen, der den Querschnitt der Außenhülle AH nahezu vollständig überdeckt, wobei lediglich ein umfangsseitig angeordneter Spalt verbleibt, der zumindest abschnittsweise als Außenlufteinlass LE herangezogen werden kann.

Der in Figur 1 gezeigte Deckel DE sowie die Oberseite des Erdreichs ER bilden eine nahezu ebene Fläche, wobei die Außenhülle AH typischerweise in Form eines Zylinders mit kreisförmigem Querschnitt ausgebildet ist, die über ihre ganze axiale Höhe im Erdreich ER angeordnet ist. In anderen Ausführungsformen kann es jedoch möglich sein, dass die Vorrichtung VO teilweise über die Oberseite des Erdreichs hinausragt, sodass der Außenlufteinlass LE ebenfalls über einen zylindrischen Außenbereich erfolgen könnte. Anstelle einer Außenhülle AH wäre dann hier beispielsweise ein Schutzgitter oder dergleichen zwischen der Oberseite des Erdreichs ER und dem Deckel DE angebracht.

Die Form der Vorrichtung VO kann bezüglich der Grundfläche sowohl rund als auch als Vieleck ausgeführt werden. Andere Formen wie elliptisch oder dergleichen, sind nicht ausgeschlossen.

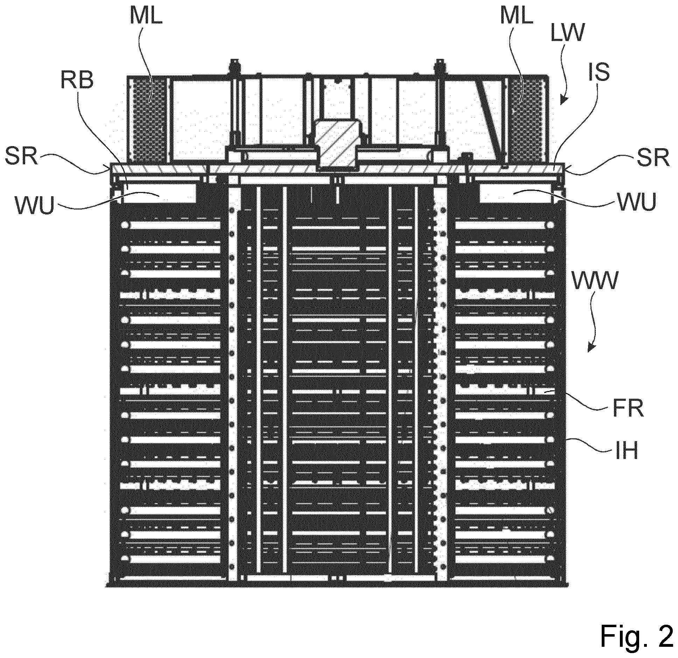

Figur 2 zeigt das Innere der Vorrichtung VO in einem Längsschnitt. Der Anschaulichkeit halber ist die Außenhülle AH nicht dargestellt.

Die Vorrichtung VO ist aus einem Luftwärmetauscher LW und einem Wasserwärmetauscher WW aufgebaut, wobei der Wasserwärmetauscher WW ein innerhalb einer Innenhülle IH ausgebildetes Flüssigkeitsreservoir FR aufweist, das auf der Bodenplatte BP ruht. Nach oben hin ist der Wasserwärmetauscher WW vom Luftwärmetauscher LW mittels einer Isolationsschicht IS getrennt, die bezüglich der Außenhülle AH durch einen nachträglich einzubringenden Außenrahmen weiter abgedichtet sein kann. Somit ist es möglich, die Einheit, bestehend aus Luftwärmetauscher LW, Isolationsschicht IS und Wasserwärmetauscher WW gemeinsam in das Innere der Außenhülle AH zu führen, wobei mittels des Außenrahmens nachträglich eine Isolation zwischen dem vom Außenlufteinlass LE durchströmten Bereich des Luftwärmetauschers LW und dem Bereich des Wasserwärmetauschers WW geschaffen werden kann.

Nach Befüllen des Flüssigkeitsreservoirs FR des Wasserwärmetauschers WW kann insbesondere vorgesehen sein, dass die Innenhülle IH aufgrund einer flexiblen Ausgestaltung in Richtung der Außenhülle AH gepresst wird, was eine zusätzliche Stabilisierung der Außenhülle AH zum umgebenden Erdreich ER schafft.

Der Wasserwärmetauscher WW weist kreisförmig aufgewickelte Rohre auf, die innerhalb des Flüssigkeitsreservoirs FR angeordnet sind. Typischerweise wird das Flüssigkeitsreservoir FR mit Wasser gefüllt sein, wobei jedoch andere Flüssigkeitsmedien, wie z. B. Paraffinverbindungen oder dergleichen nicht ausgeschlossen sind. Auch hier werden wiederum entsprechende Zuleitungen bzw. Abflussleitungen eine Verbindung mit der im Gebäude befindlichen Wärmepumpe herstellen, wobei die Rohre typischerweise mit einem Wasserglykolgemisch durchströmt sind, um einen Energietransfer bzw. eine Energiespeicherung zu erreichen.

Das Ausführungsbeispiel des Luftwärmetauschers LW weist mehrere Metalllamellen ML auf, die in Form mehrerer Blöcke angeordnet sind. hierbei werden die Metalllamellen ML typischerweise aus Gründen der Gewichtsreduzierung in Aluminium gefertigt, während die Metalllamellen ML verbindende Rohre aus Kupfer hergestellt sein können. Die Metalllamellen ML werden von Umgebungsluft, auch als Außenluft bezeichnet, umströmt, wobei die Umgebungsluft über den Außenlufteinlass LE mittels eines Ventilators VE zum Luftauslass LA am Deckel DE geführt wird. Entsprechende Zu- bzw. Abflussleitungen der Metalllamellen ML werden über die Anschlusseinheit AE mit der im Gebäude befindlichen Wärmepumpe verbunden.

An der dem Flüssigkeitsreservoir FR zugewandten Seite der Isolationsschicht IS ist ein Wärmeübertrager WU mit scheibenförmiger Grundform angeordnet. Der Wärmeübertrager WU ist ausgebildet, die einströmende Abluft über das Flüssigkeitsreservoir FR in einen umlaufenden Randbereich RB in der Peripherie des Wasserwärmetauschers WU zu lenken, sodass es zu einer Energieübertragung von warmer Abluft zur Flüssigkeit im Flüssigkeitsreservoir FR kommt.

Vom Randbereich RB strömt die Abluft dann als Fortluftstrom in den Luftwärmetauscher LW, in dem es zu einer Vermischung von Fortluftstrom und der in den Luftwärmetauscher einströmenden Umgebungsluft kommt. Die Abluft kann nach Durchströmen des Wärmeübertragers WU am Seitenrand SR der Isolationsschicht IS vorbeiströmen. Um dies zu ermöglichen kann der Außenrahmen, falls vorhanden, zwischen Isolationsschicht IS und Außenhülle AH entsprechend ausgestaltet sein und beispielsweise Aussparungen aufweisen. Alternativ oder zusätzlich können Aussparungen in der Isolationsschicht IS vorgesehen sein.

Wie Figur 2 zu entnehmen ist, sind im Wasserwärmetauscher WW fünfzehn Gruppen der kreisförmig aufgewickelten Rohre übereinanderliegend angeordnet. Jede dieser Gruppen wird über eine eigene Zuleitung und einer eigenen Pumpe versorgt, welche ausgehend von einem Verteiler mit der Wärmepumpe in Verbindung steht. Die Zahl der Gruppen kann selbstverständlich je nach gewünschter Leistung in Abhängigkeit der Größe des Flüssigkeitsreservoirs FR variiert werden.

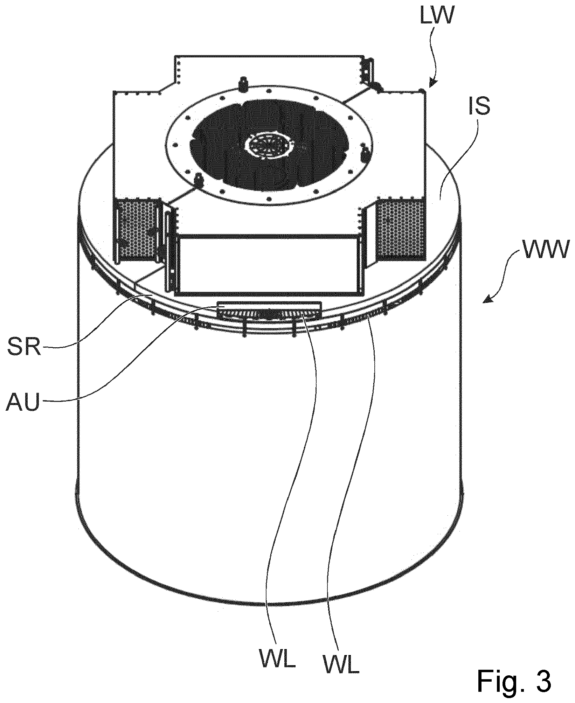

Figur 3 zeigt das Innere der Vorrichtung VO mit dem Luftwärmetauscher LW und dem Wasserwärmetauscher WW in einer dreidimensionalen Darstellung.

In der Isolationsschicht IS ist eine als Ablufteinlass AU dienende Aussparung, über die Abluft von der Anschlusseinheit AE in den Wärmeübertrager WU eingeleitet wird. Zu diesem Zweck kann ein Rohr oder Schacht, die der Anschaulichkeit halber nicht dargestellt sind, von der Anschlusseinheit AE zur Aussparung führen.

Die durch den Ablufteinlass AU eingeleitete Abluft wird zunächst von der am Rand angeordneten Aussparung in einen zentralen Bereich ZB des Wärmeübertragers WU geführt und von dort aus radial zum umlaufenden Randbereich RB des Wärmeübertragers WU verteilt. Der Wärmeübertrager WU taucht teilweise in das Flüssigkeitsreservoir FR ein. Die warme Abluft strömt folglich über die nicht mit Flüssigkeit bedeckte Oberfläche des Wärmeübertragers WU, sodass es zu einem Energieaustausch über den mit Flüssigkeit bedeckten Teil der Oberfläche des Wärmeübertragers WU mit der Flüssigkeit im Flüssigkeitsreservoir FR kommt, bei der die Wärme der Abluft zumindest teilweise an die Flüssigkeit abgegeben wird. Danach strömt die über den Wärmeübertrager WU bereits teilweise abgekühlte Abluft am Seitenrand SR der Isolationsschicht IS vorbei in den Luftwärmetauscher LW und kann sich mit der in den Luftwärmetauscher LW einströmenden Umgebungsluft mischen. Da die Energie der Abluft im oberflächennahen Bereich an die Flüssigkeit übertragen wird, kann eine nicht in den Figuren dargestellte Umwälzung erforderlich sein. Alternativ ist es auch möglich, die oberste Gruppe der kreisförmig aufgewickelten Rohre unmittelbar benachbart zum Wärmeübertrager WU so zu betreiben, dass deren Pumpe immer oder in gesteuerten Zeitabschnitten aktiviert ist, so dass über die Zirkulation der Arbeitsflüssigkeit der Wärmepumpe im Inneren der Rohre ein Temperaturausgleich über das gesamte Flüssigkeitsreservoir FR geschaffen wird.

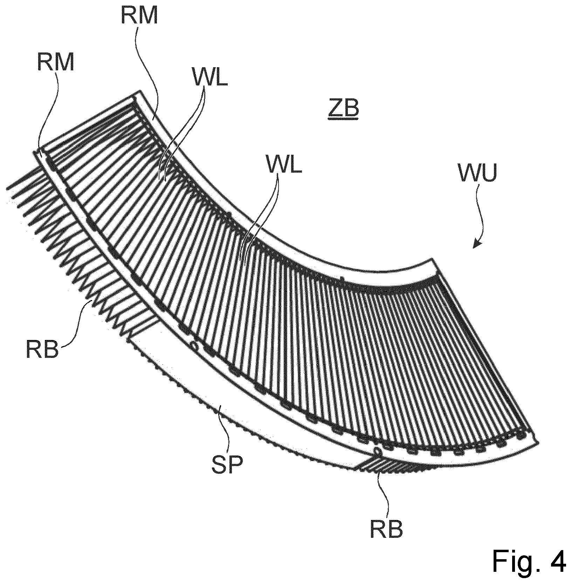

Figur 4 zeigt einen dreidimensionalen Abschnitt des Wärmeübertragers WU im Wasserwärmetauscher WW. Er hat eine scheibenförmige Grundform, von der lediglich ein scheibensegmentförmiger Abschnitt gezeigt ist, in dem auch die Abluft einströmt.

Der Wärmeübertrager WU weist eine Vielzahl von, vorzugsweise metallenen, Lamellen WL auf, die zumindest bereichsweise radial verlaufen. Unter bereichsweise radial wird verstanden, dass die Richtung, in der sie verlaufen, zumindest eine radiale Komponente aufweist. Vorzugsweise verlaufen die Lamellen WL von innen nach außen gerade und radial. Ein alternativer Verlauf ist gebogen. Die Lamellen WL sind vorzugsweise senkrecht zur Längsachse des Wasserwärmetauschers WW anordnet. In einer alternativen Ausführung können sie schräg oder gebogen von oben nach unten verlaufen, um die Strömung der durchfließenden Abluft zu beeinflussen. Die Lamellen WL sind auch in Lücken zwischen den einzelnen Komponenten in Figur 3 zu erkennen.

Die Lamellen WL lenken den einströmenden Abluftstrom in radiale Richtung. Die von oben durch den Ablufteinlass AU am Rand einströmende Abluft wird durch die Lamellen WL, die benachbart zum Ablufteinlass AU angeordnet sind, zunächst in den zentralen Bereich ZB gelenkt und von dort durch die umlaufend angeordneten, radial verlaufenden Lamellen WL verteilt und zum umlaufenden Randbereich RB des Wärmeübertragers WU geführt. Eine Strömungssperre SP an den Lamellen WL, die die Abluft in den zentralen Bereich ZB lenken, verhindert, dass die Abluft, statt zunächst in den zentralen Bereich ZB zu strömen, direkt zum Randbereich RB strömen und dort austreten würde. Dies würde die Leistungsfähigkeit des Wärmeübertragers WU deutlich mindern, da der Energieaustausch mit der Flüssigkeit auf Grund des kurzen Weges über die Flüssigkeitsoberfläche nur sehr eingeschränkt stattfände. Die Strömungssperre SP ist ein gebogenes Blech an den radialen Enden der Lamellen WL, die die Abluft in den zentralen Bereich ZB lenken.

Der Wärmeübertrager WU kann beispielsweise an der Isolationsschicht IS oder dem Außenrahmen befestigt sein. Die Lamellen WL sind in diesem Ausführungsbeispiel zwischen zwei konzentrischen kreisförmigen Rahmen RM befestigt, die an der Isolationsschicht IS befestigt sind. Typischerweise werden einige hundert, im gezeigten Beispiel ca. 900 derartiger Lamellen WL aus Aluminium verbaut sein, die beispielsweise 10 cm hoch sind und über die halbe Höhe während des Betriebs mit Flüssigkeit bedeckt sind.

## Patentansprüche

1. Vorrichtung zur Energieübertragung und zur Energiespeicherung in einem Flüssigkeitsreservoir (FR), wobei die Vorrichtung (VO) einen Wasserwärmetauscher (WW) und einen über dem Wasserwärmetauscher (WW) angeordneten Luftwärmetauscher (LW) aufweist, wobei der Wasserwärmetauscher (WW) in einem Flüssigkeitsreservoir (FR) angeordnet ist, und wobei die Vorrichtung (VO) einem Außenlufteinlass (LE) aufweist, von dem ein Außenluftstrom zu einem Luftauslass (LA) durch den Luftwärmetauscher (LW) erzeugbar ist, **gekennzeichnet durch** einen Wärmeübertrager (WU), der ausgebildet ist, von einem Ablufteinlass (AU) einströmende Abluft zur Energieübertragung über das Flüssigkeitsreservoir (FR) in einen Randbereich (RB) des Wärmeübertragers (WU) zu führen, von dem aus die Abluft als Fortluftstrom dem Luftwärmetauscher (LW) zuführbar ist, in dem sich der Außenluftstrom und der Fortluftstrom mischen.

2. Vorrichtung nach Anspruch 1, wobei der Ablufteinlass (AU) beabstandet vom Außenlufteinlass (LE) und oberhalb einer Flüssigkeitsoberfläche des Flüssigkeitsreservoirs (FR) angeordnet ist.

3. Vorrichtung nach Anspruch 1 oder 2, wobei der Wärmeübertrager (WU) ausgebildet ist, die Abluft zunächst in einen zentralen Bereich (ZB) zu führen und von dort aus radial zum umlaufenden oder nahezu umlaufenden Randbereich (RB) zu verteilen.

4. Vorrichtung nach einem der vorangegangenen Ansprüche, wobei der Wärmeübertrager (WU) zumindest bereichsweise radial verlaufende Lamellen (WL) aufweist.

5. Vorrichtung nach Anspruch 4, wobei der Wärmeübertrager (WU) ausgebildet ist, dass die Abluft durch Lamellen (WL), die benachbart zum Ablufteinlass (AU) angeordnet sind, in den zentralen Bereich (ZB) geführt wird und durch die anderen Lamellen (WL) aus dem zentralen Bereich (ZB) zum Randbereich (RB) verteilt wird.

6. Vorrichtung nach Anspruch 5, wobei an den Lamellen (WL), durch die Abluft zum zentralen Bereich geführt wird, eine Strömungssperre (SP) zum Randbereich (RB) angeordnet ist.

7. Vorrichtung nach einem der vorangegangenen Ansprüche, bei der zwischen dem Wasserwärmetauscher (WW) und dem Luftwärmetauscher (LW) eine Isolationsschicht (IS) angeordnet ist und bei der der Wärmeübertrager (WU) an der dem Flüssigkeitsreservoir (FR) zugewandten Seite der Isolationsschicht (IS) angeordnet ist.

8. Vorrichtung nach Anspruch 7, wobei die Isolationsschicht (IS) Durchlässe für die zum Randbereich (RB) geführte Abluft aufweist oder derart ausgebildet ist, dass die Abluft am Seitenrand (SR) der Isolationsschicht (IS) vorbeiströmt.

9. Vorrichtung nach Anspruch 7 oder 8, wobei der Ablufteinlass (AU) an einer Aussparung der Isolationsschicht (IS) angeordnet ist.

10. Vorrichtung nach Anspruch 7 oder 8, bei der zwischen der Isolationsschicht (IS) und der Außenhülle (AH) ein wenigstens teilweise umlaufender Außenrahmen als Abdichtung angebracht ist, wobei der Ablufteinlass (AU) im Außenrahmen angeordnet ist und/oder der Außenrahmen derart ausgestaltet ist, dass die Abluft hindurchströmen kann.

11. Vorrichtung nach einem der vorangegangenen Ansprüche, wobei die Vorrichtung (VO) nach oben durch einen Deckel (DE) so abgeschlossen ist, dass der Außenluftstrom vom Außenlufteinlass (LE) zum Luftauslass (LA) durch den Luftwärmetauscher (LW) erzeugbar ist.

12. Vorrichtung nach Anspruch 11, bei der der Außenlufteinlass (LE) schlitzförmig entlang des Außenumfang des Deckels (DE) ausgebildet ist.

13. Vorrichtung nach Anspruch 11 oder 12, bei der der Luftauslass (LA) mittig am Deckel (DE) angeordnet ist, wobei vorzugsweise unterhalb des Deckels (DE) am Luftauslass (LA) ein Ventilator (VE) angeordnet ist.

14. Vorrichtung nach einem der vorhergehenden Ansprüche, wobei das Flüssigkeitsreservoir (FR) von einer Innenhülle (IH) umgeben ist, die die Vorrichtung (VO) gegen eine die Innenhülle (IH) von einem Boden (BP) aus überdeckende Außenhülle (AH) abgrenzt, wobei die Außenhülle (AH) wenigstens teilweise in eine Erdschicht (ER) eingebracht ist.

## Claims

1. Device for energy transmission and for energy storage in a liquid reservoir (FR), the device (VO) comprising a water heat exchanger (WW) and an air heat exchanger (LW) arranged above the water heat exchanger (WW), the water heat exchanger (WW) being arranged in a liquid reservoir (FR), and the device (VO) having a fresh air inlet (LE) from which a fresh air flow can be induced to an air outlet (LA) by the air heat exchanger (LW), **characterized by** a heat exchanger (WU) which is designed to direct exhaust air flowing in from an exhaust air inlet (AU) for energy transmission via the liquid reservoir (FR) to an edge region (RB) of the heat exchanger (WU), from which heat exchanger the exhaust air can be supplied to the air heat exchanger (LW) as an extract air flow, in which the fresh air flow and the extract air flow mix.

2. Device according to claim 1, wherein the exhaust air inlet (AU) is arranged at a distance from the fresh air inlet (LE) and above a liquid surface of the liquid reservoir (FR).

3. Device according to either claim 1 or claim 2, wherein the heat exchanger (WU) is designed to first direct the exhaust air into a central region (ZB) and from there to distribute it radially to the circumferential or virtually circumferential edge region (RB).

4. Device according to any of the preceding claims, wherein the heat exchanger (WU) has fins (WL) that extend radially at least in portions.

5. Device according to claim 4, wherein the heat exchanger (WU) is designed such that the exhaust air is directed into the central region (ZB) by fins (WL) arranged adjacent to the exhaust air inlet (AU) and is distributed from the central region (ZB) to the edge region (RB) by the other fins (WL).

6. Device according to claim 5, wherein a flow barrier (SP) against the edge region (RB) is arranged on the fins (WL) by which exhaust air is directed to the central region.

7. Device according to any of the preceding claims, in which an insulation layer (IS) is arranged between the water heat exchanger (WW) and the air heat exchanger (LW), and in which the heat exchanger (WU) is arranged on the side of the insulation layer (IS) facing the liquid reservoir (FR).

8. Device according to claim 7, wherein the insulation layer (IS) has passages for the exhaust air directed to the edge region (RB) or is designed such that the exhaust air flows past the side edge (SR) of the insulation layer (IS).

9. Device according to either claim 7 or claim 8, wherein the exhaust air inlet (AU) is arranged on a recess of the insulation layer (IS).

10. Device according to either claim 7 or claim 8, in which an at least partially circumferential outer frame is attached as a seal between the insulation layer (IS) and the outer shell (AH), wherein the exhaust air inlet (AU) is arranged in the outer frame and/or the outer frame is designed such that the exhaust air can flow through.

11. Device according to any of the preceding claims, wherein the device (VO) is closed off at the top by a cover (DE) such that the fresh air flow from the fresh air inlet (LE) to the air outlet (LA) can be induced by the air heat exchanger (LW).

12. Device according to claim 11, wherein the fresh air inlet (LE) is formed along the outer circumference of the cover (DE) as a slot.

13. Device according to either claim 11 or claim 12, in which the air outlet (LA) is arranged in the center of the cover (DE), wherein a fan (VE) is preferably arranged below the cover (DE) at the air outlet (LA).

14. Device according to any of the preceding claims, wherein the liquid reservoir (FR) is surrounded by an inner shell (IH) which separates the device (VO) from an outer shell (AH) covering the inner shell (IH) from a bottom (BP), wherein the outer shell (AH) is at least partially introduced into a layer of soil (ER).

## Revendications

1. Dispositif permettant le transfert d'énergie et le stockage d'énergie dans un réservoir de liquide (FR), dans lequel le dispositif (VO) présente un échangeur de chaleur à eau (WW) et un échangeur de chaleur à air (LW) disposé au-dessus de l'échangeur de chaleur à eau (WW), dans lequel l'échangeur de chaleur à eau (WW) est disposé dans un réservoir de liquide (FR), et dans lequel le dispositif (VO) présente une entrée d'air extérieur (LE) à partir de laquelle un écoulement d'air extérieur peut être généré vers une sortie d'air (LA) par l'échangeur de chaleur à air (LW), **caractérisé par** un appareil de transfert de chaleur (WU) qui est réalisé de manière à guider de l'air évacué s'écoulant depuis une entrée d'air évacué (AU) dans une zone marginale (RB) de l'appareil de transfert de chaleur (WU) pour le transfert d'énergie par l'intermédiaire du réservoir de liquide (FR), zone marginale à partir de laquelle l'air évacué peut être amené en tant qu'écoulement d'air d'échappement à l'échangeur de chaleur à air (LW) dans lequel l'écoulement d'air extérieur et l'écoulement d'air d'échappement se mélangent.

2. Dispositif selon la revendication 1, dans lequel l'entrée d'air évacué (AU) est disposée à distance de l'entrée d'air extérieur (LE) et au-dessus d'une surface de liquide du réservoir de liquide (FR).

3. Dispositif selon la revendication 1 ou 2, dans lequel l'appareil de transfert de chaleur (WU) est réalisé de manière à guider tout d'abord l'air évacué dans une zone centrale (ZB) et, à partir de celle-ci, à le distribuer radialement vers la zone marginale (RB) circonférentielle ou presque circonférentielle.

4. Dispositif selon l'une des revendications précédentes, dans lequel l'appareil de transfert de chaleur (WU) présente des ailettes (WL) s'étendant radialement au moins dans certaines zones.

5. Dispositif selon la revendication 4, dans lequel l'appareil de transfert de chaleur (WU) est réalisé de telle manière que l'air évacué est guidé dans la zone centrale (ZB) par des ailettes (WL) qui sont disposées de manière adjacente à l'entrée d'air évacué (AU) et est distribué par les autres ailettes (WL) hors de la zone centrale (ZB) vers la zone marginale (RB).

6. Dispositif selon la revendication 5, dans lequel est disposée, sur les ailettes (WL) au moyen desquelles l'air évacué est guidé vers la zone centrale, une barrière d'écoulement (SP) vers la zone marginale (RB).

7. Dispositif selon l'une des revendications précédentes, dans lequel une couche d'isolation (IS) est disposée entre l'échangeur de chaleur à eau (WW) et l'échangeur de chaleur à air (LW) et dans lequel l'appareil de transfert de chaleur (WU) est disposé sur le côté de la couche d'isolation (IS) qui est tourné vers le réservoir de liquide (FR).

8. Dispositif selon la revendication 7, dans lequel la couche d'isolation (IS) présente des passages pour l'air évacué guidé vers la zone marginale (RB) ou est réalisée de telle sorte que l'air évacué s'écoule en passant devant le bord latéral (SR) de la couche d'isolation (IS).

9. Dispositif selon la revendication 7 ou 8, dans lequel l'entrée d'air évacué (AU) est disposée au niveau d'un évidement de la couche d'isolation (IS).

10. Dispositif selon la revendication 7 ou 8, dans lequel un cadre extérieur au moins partiellement circonférentiel est monté en tant qu'élément de scellement entre la couche d'isolation (IS) et l'enveloppe extérieure (AH), dans lequel l'entrée d'air évacué (AU) est disposée dans le cadre extérieur et/ou le cadre extérieur est conçu de telle sorte que l'air évacué peut s'écouler à travers celui-ci.

11. Dispositif selon l'une des revendications précédentes, dans lequel le dispositif (VO) est fermé vers le haut par un couvercle (DE) de sorte que l'écoulement d'air extérieur peut être généré depuis l'entrée d'air extérieur (LE) vers la sortie d'air (LA) par l'échangeur de chaleur à air (LW).

12. Dispositif selon la revendication 11, dans lequel l'entrée d'air extérieur (LE) est réalisée en forme de fente le long de la circonférence extérieure du couvercle (DE).

13. Dispositif selon la revendication 11 ou 12, dans lequel la sortie d'air (LA) est disposée au centre sur le couvercle (DE), dans lequel un ventilateur (VE) est de préférence disposé en dessous du couvercle (DE) au niveau de la sortie d'air (LA).

14. Dispositif selon l'une des revendications précédentes, dans lequel le réservoir de liquide (FR) est entouré d'une enveloppe intérieure (IH) délimitant le dispositif (VO) par rapport à une enveloppe extérieure (AH) recouvrant l'enveloppe intérieure (IH) à partir d'un fond (BP), dans lequel l'enveloppe extérieure (AH) est au moins partiellement introduite dans une couche de terre (ER).
